# EUROPÄISCHE PATENTSCHRIFT

(11) **EP 2 949 038 B1**
(45) Veröffentlichungstag und Bekanntmachung des Hinweises auf die Patenterteilung: **20.03.2019**
(21) Anmeldenummer: 14706267.3
(22) Anmeldetag: 20.01.2014
(51) Int. Cl.: H02S 30/20

(54) **SOLARMODUL**
SOLAR MODULE
MODULE SOLAIRE

(30) Priorität: 23.01.2013 AT 500502013
(43) Veröffentlichungstag der Anmeldung: 02.12.2015
(73) Patentinhaber: SFS Acquisition, LLC., Boston, MA 02116 (US)
(72) Erfinder: SWATEK, Alexander, A-7540 Güssing (AT); STÖGER, Elmar, A-2822 Bad Erlach (AT); KASER, Alfred, 8200 Gleisdorf (AT); PRÄSENT, Manfred, A-9330 Althofen (AT)
(74) Vertreter: Weiser & Voith Patentanwälte Partnerschaft
(86) Internationale Anmeldenummer: PCT/AT2014/050019
(87) Internationale Veröffentlichungsnummer: WO 2014/113830

(56) Entgegenhaltungen:
- WO-A1-93/18554
- AT-B1- 509 886
- CN-Y- 201 387 891
- FR-A1- 2 567 472
- FR-A1- 2 942 351
- JP-A- H10 304 918
- JP-A- 2012 057 775

## Beschreibung

Die vorliegende Erfindung betrifft ein Solarmodul, mit einer Vielzahl von lamellenförmigen Solarpaneelen, die auf einer gemeinsamen Achse zwischen einer ersten Stellung, in der sie im wesentlichen deckungsgleich übereinanderliegen, und einer zweiten Stellung, in der sie aufgefächert im wesentlichen nebeneinanderliegen, verschwenkbar gelagert sind.

Ein derartiges Solarmodul ist aus der AT 509 886 B1 bekannt und hat den Vorteil, dass die empfindlichen Solarpaneele in der zusammengeschobenen ersten Stellung platzsparend in einem Schutzgehäuse untergebracht werden können, in welchem sie in der Nacht oder bei schlechter Witterung, z.B. Sturm, Blitzschlag, Hagel oder starkem Regen, vor Beschädigung geschützt sind, und in der aufgefächerten zweiten Stellung eine maximale Auffangfläche für Sonnenlicht darbieten.

Für das Auffächern um die genannte gemeinsame Achse ist es aus dieser Schrift bekannt, z.B. nur das oberste oder unterste Solarpaneel des Fächerstapels anzutreiben, wobei jedes Solarpaneel das darunter- bzw. darüberliegende Solarpaneel über Mitnehmer mitschleppt. Bei der bekannten Konstruktion sind als Mitnehmer Schlepphaken bzw. Schleppleisten vorgesehen, welche über die gesamte Länge eines Solarpaneels entlang dessen Längskante verlaufen.

Die Erfindung setzt sich zum Ziel, eine verbesserte Konstruktion zum Auffächern des Solarmoduls zu schaffen.

Dieses Ziel wird mit einem Solarmodul der eingangs genannten Art erreicht, welches sich gemäß der Erfindung dadurch auszeichnet, dass von je zwei einander benachbarten Solarpaneelen ausschließlich der achsseitige Endabschnitt des einen Solarpaneels zumindest einen Mitnehmer und ausschließlich der achsseitige Endabschnitt des anderen Solarpaneels zwei mit dem Mitnehmer zusammenwirkende, in Tangentialrichtung voneinander beabstandete Anschläge aufweist, wobei die Solarpaneele in der aufgefächerten zweiten Stellung in ihren an die genannten Endabschnitte anschließenden radial auskragenden Abschnitten voneinander beabstandet sind.

Die Erfindung beruht auf der Erkenntnis, dass über die ganze Länge der Solarpaneele verlaufende Schleppleisten zu einer ungünstigen Verzahnung der Solarpaneele im aufgefächerten Zustand führt, welche deren Flexibilität beeinträchtigt und damit ihre Windanfälligkeit erhöht; die Schleppleisten können im übrigen bei Vibrationen zu Beschädigungen der Solarpaneele führen. Durch die erfindungsgemäße Positionierung der Mitnehmer und Anschläge ausschließlich auf den achsseitigen Endabschnitten der Solarpaneele bleiben die aufgefächerten Solarpaneele in ihren radial auskragenden Abschnitten voneinander unbeeinflusst, sodass sie dort ungehindert ausschwingen können, was ihre Windsicherheit und damit Lebensdauer erhöht.

Mithilfe der erfindungsgemäßen Konstruktion können die photovoltaisch wirksamen Außenabschnitte der Solarpaneele modular austauschbar von den zur Schleppkonstruktion dienenden achsseitigen Endabschnitten gestaltet werden. Dadurch können z.B. alle achsseitigen Endabschnitte in der Art eines zentralen "Auffächerlagers" für verschiedenste Typen und Größen von Solarpaneelen einheitlich ausgelegt werden.

Bevorzugt sind die Endabschnitte etwa scheibenförmig und je zwei einander benachbarte Endabschnitte weisen auf ihren einander zugewandten Scheibenseiten zumindest zwei, bevorzugt zumindest drei, in Tangentialrichtung verteilte Mitnehmer und damit zusammenwirkende Anschläge auf. Dadurch liegen die Solarpaneele mit ihren Endabschnitten scheibenförmig aneinander an, was sie axial auf der gemeinsamen Achse positioniert. Die Krafteinleitung beim Auffächern wird dabei über die umfangsmäßig verteilten Mitnehmer und Anschläge symmetrisch auf die Scheibenabschnitte verteilt, sodass diese keinen Verkantungskräften unterworfen sind, was die Reibung zwischen den Endabschnitten minimiert.

Besonders bevorzugt sind jeweils zwei in Tangentialrichtung voneinander beabstandete Anschläge durch ein tangentiales Langloch im Endabschnitt gebildet, in welches der Mitnehmer des benachbarten Endabschnitts eingreift. Dies ergibt eine Mitnehmer/Anschlag-Konstruktion mit minimalem axialen Platzbedarf, indem der Mitnehmer des einen Endabschnitts direkt in das Langloch des benachbarten Endabschnittes eintaucht.

Gemäß einer ersten Ausführungsform der Erfindung ist zumindest ein Endabschnitt aus den Enden von Stützstreben eines Solarpaneels gebildet, welche sandwichartig zwischen zwei auf der Achse gelagerten Montageplatten befestigt sind, von denen die eine zumindest ein tangentiales Langloch und die andere einen Mitnehmer aufweist. Dadurch kommt es zu einem symmetrischen, ununterbrochenen Kraftfluss von den Stützstreben ("Blattadern") eines Solarpaneels über die symmetrisch daran anliegenden Montageplatten auf die Lagerachse. Die Stützstreben können auch beidseitig um die Lagerachse herumgeführt werden, d.h. die Lagerachse kann auch zwischen den Stützstreben zu liegen kommen. Jeder Mitnehmer kann bevorzugt durch einen mit der einen Montageplatte vernieteten Bolzen gebildet werden, was eine überaus einfache Fertigung gestattet.

Gemäß einer zweiten vorteilhaften Ausführungsform der Erfindung ist zumindest ein Endabschnitt aus einer auf der Achse gelagerten Montageplatte für Stützstreben eines Solarpaneels und einer daran drehfest anliegenden Distanzscheibe gebildet, wobei die Distanzscheibe zumindest ein tangentiales Langloch und die Montageplatte zumindest einen auskragenden Bolzen als Mitnehmer aufweist. Bei dieser Variante wird die Drehmomentübertragung von Paneel zu Paneel über die jeweils mit einem Paneel drehfest verbundenen Distanzscheiben erreicht, welche z.B. als Spritzgussteil besonders einfach mit den tangentialen Langlöchern ausgestattet werden können. Besonders vorteilhaft ist es, wenn der Bolzen die Montageplatte durchsetzt und in einer Ausnehmung der Distanzscheibe rastet, sodass ein und dasselbe Element, nämlich der Bolzen, auf der einen Seite der Montageplatte als Mitnehmer und auf der anderen Seite der Montageplatte als Drehfixierung für die dort anliegende Distanzscheibe verwendet werden kann.

Gemäß einer dritten vorteilhaften Ausführungsform der Erfindung ist zwischen zumindest zwei Endabschnitten eine Distanzscheibe auf die Achse aufgefädelt, welche tangentiale Langlöcher für den Durchtritt der miteinander zusammenwirkenden Mitnehmer und Anschläge der Endabschnitte hat. Die Drehmomentübertragung von Paneel zu Paneel erfolgt hierbei direkt zwischen den Mitnehmern des einen Paneels und den Anschlägen des anderen Paneels, so dass die Distanzscheibe nur zur Abstandshaltung dient und dadurch z.B. als Spritzgussteil besonders gewichtssparend und filigran ausgeführt werden kann. Demgemäß ist die Distanzscheibe bevorzugt als vielfach durchbrochene Gleitscheibe ausgebildet.

Grundsätzlich kann das Solarmodul jede beliebige Anzahl von Solarpaneelen aufweisen. Gemäß einer günstigen Ausführungsform sind zwölf Solarpaneele vorgesehen und jedes Langloch erstreckt sich tangential über einen Winkel von etwa 30°, was einen guten Kompromiss zwischen Komplexität einerseits und Kompaktheit im zusammengeschobenen Zustand andererseits darstellt.

Gemäß einem weiteren bevorzugten Merkmal der Erfindung ist die Achse an einer Tragstruktur des Solarmoduls drehbar gelagert, wobei der Endabschnitt des ersten, der Tragstruktur zugewandten Solarpaneels an der Tragstruktur festgelegt ist und der Endabschnitt des letzten, der Tragstruktur abgewandten Solarpaneels mit der Achse drehfest verbunden ist. Dabei ist es besonders günstig, wenn das der Tragstruktur abgewandte Ende der Achse mit einer Deckelplatte versehen ist, welche mit dem letzten Endabschnitt drehfest verbunden ist. Beide Maßnahmen vereinfachen den Antrieb der Solarpaneele beim Auffächern und Wiederzusammenschieben, da die Fädel- und Lagerachse gleichzeitig als Antriebswelle dient. Der Antrieb der Achse lässt sich damit auf jede in der Technik bekannte Art bewerkstelligen, beispielsweise durch direkte Anflanschung an einen Elektromotor mit Untersetzungsgetriebe.

Bevorzugt wird die Achse über ein Schneckengetriebe von einem Elektromotor angetrieben. Schneckengetriebe sind stark untersetzend und selbsthemmend, wodurch eine automatische Blockierung der Solarpaneele in den aus- und eingefächerten Stellungen erreicht werden kann.

Bevorzugt werden zur Reibungsminimierung die Endabschnitte über eine gemeinsame Gleithülse auf der Achse gelagert, was die Montage vereinfacht. Ferner können auch zwischen den Endabschnitten Gleitscheiben angeordnet sein, sofern die genannten Distanzscheiben bzw. Montageplatten nicht schon selbst aus reibungsminimierendem Material gefertigt oder mit einer Gleitbeschichtung versehen sind.

Die Erfindung wird nachstehend anhand von in den beigeschlossenen Zeichnungen dargestellten Ausführungsbeispielen näher erläutert. In den Zeichnungen zeigen:
die Fig. 1a und 1b das Solarmodul der Erfindung in zwei verschiedenen Betriebsstellungen jeweils in einer Perspektivansicht;
Fig. 2 einen Schwenkkopf mit einem Auffächerlager für Solarpaneele in einer Perspektivansicht;
Fig. 3 eine erste Ausführungsform der Auffächerkonstruktion der Erfindung in einer Schnittansicht;
die Fig. 4a und 4b jeweils die Endabschnitte zweier Solarpaneele der Ausführungsformen von Fig. 3, von denen einer teilweise aufgeschnitten ist, in Perspektivansichten in zwei verschiedenen Betriebsstellungen;
Fig. 5 eine zweite Ausführungsform der Auffächerkonstruktion der Erfindung in einer ausschnittsweisen Schnittansicht;
die Fig. 6a und 6b jeweils die Endabschnitte zweier Solarpaneele der Ausführungsform von Fig. 5, von denen einer teilweise aufgeschnitten ist, in Perspektivansichten in zwei verschiedenen Betriebsstellungen;
Fig. 7 eine dritte Ausführungsform der Auffächerkonstruktion der Erfindung in einer ausschnittsweisen Schnittansicht; und
die Fig. 8a und 8b jeweils die Endabschnitte zweier Solarpaneele der Ausführungsform von Fig. 7, von denen einer teilweise aufgeschnitten ist, in Perspektivansichten in zwei verschiedenen Betriebsstellungen.

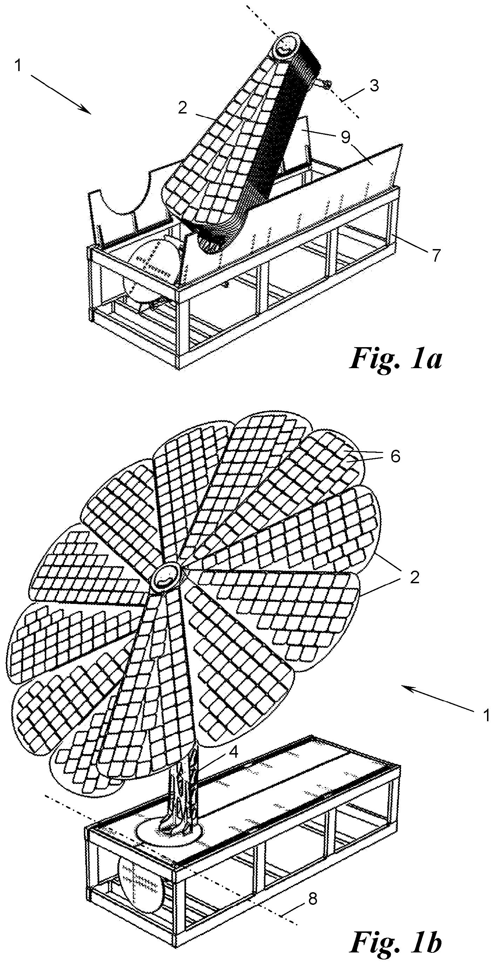

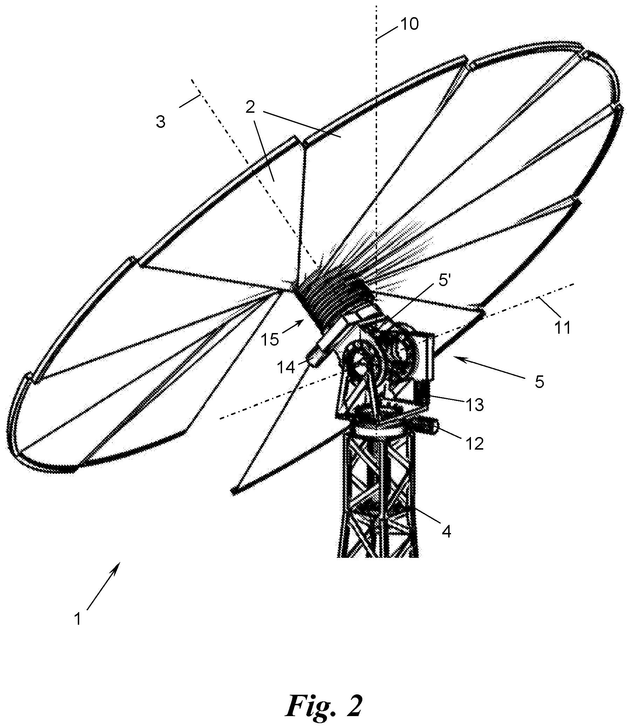

Gemäß den Fig. 1a und 1b umfasst ein Solarmodul 1 eine Vielzahl von lamellenförmigen Solarpaneelen 2, die um eine gemeinsame Achse 3 verschwenkbar an einem Träger 4, genauer einem Schwenkkopf 5 (Fig. 2) desselben, gelagert sind. Die Solarpaneele 2 besitzen etwa Kreissektorform, bevorzugt mit etwas abgerundeten Ecken ("Blütenblattform"), wie dargestellt.

Jedes Solarpaneel 2 weist auf seiner Oberseite ein flächiges Array von photovoltaischen Zellen 6 auf, z.B. in kristalliner oder organischer Form oder in Dünnschichttechnologie. Die elektrischen Anschlüsse und Verschaltungen der Solarpaneele 2 und Solarzellen 6 sind zwecks Übersichtlichkeit nicht gezeigt; beispielsweise werden die Solarpaneele 2 über flexible Anschlusskabel oder Schleifkontakte und starre Kontaktringe am Träger 4 bzw. Schwenkkopf 5 kontaktiert und an die weitere E-nergieübertragungselektrik angeschlossen.

Durch ihre Schwenklagerung um die Drehachse 3 können die Solarpaneele 2 von einer ersten, in Fig. 1a gezeigten zusammengeschobenen ("eingefächerten") Stellung, in der sie im Wesentlichen deckungsgleich übereinanderliegen, in eine zweite, in Fig. 1b gezeigte aufgefächerte Stellung, in welcher sie um die Drehachse 3 herum aufgefächert sind und damit im Wesentlichen nebeneinanderliegen, verbracht werden und umgekehrt. Die Solarpaneele 2 besitzen dabei bevorzugt eine solche Kreissektor- bzw. Blütenblattform, dass sie sich in der aufgefächerten Stellung (Fig. 1b) etwa zu einem Vollkreis ergänzen. Beispielsweise werden zwölf Solarpaneele 2 vorgesehen, deren Kreissektorwinkel jeweils ca. 30° beträgt, wobei der Verschwenkwinkel eines Solarpaneels 2 gegenüber seinem benachbarten Solarpaneel 2 dementsprechend etwa 30° beträgt.

Der Träger 4 mitsamt dem Schwenkkopf 5 kann beispielsweise in einem Gehäuse 7 oder an einer sonstigen Standkonstruktion um eine horizontale Achse 8 schwenkbar gelagert sein, sodass er beispielsweise mitsamt den eingefächerten Solarpaneelen 2 in das Gehäuse 7 eingeschwenkt und dieses mit Schutzdeckeln 9 verschlossen werden kann, um die Solarpaneele 2 in der eingefahrenen Stellung vor Witterungseinflüssen zu schützen. Das Gehäuse 7 kann beispielsweise bündig in den Erdboden, eine Gebäudefassade, ein Gebäudedach oder die Karosserie eines Fahrzeugs eingelassen oder integriert werden; das Gehäuse 7 kann aber auch entfallen. Der Träger 4 kann z.B. ein vertikaler Steher sein, der fest am Untergrund verankert ist und an dem die Solarpaneele 2 im eingefächerten Zustand vertikal herunterhängen.

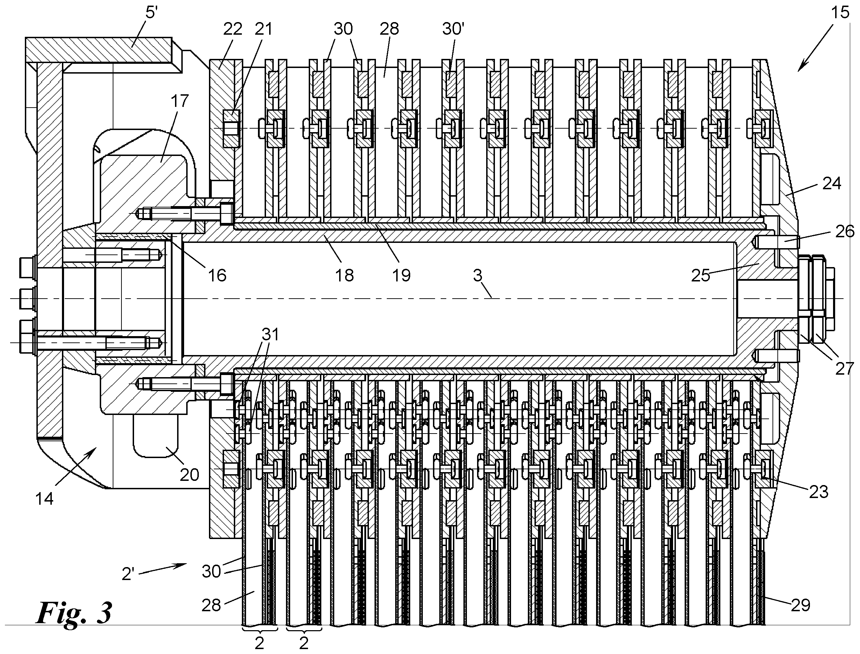

Wie in Fig. 2 gezeigt, kann der Schwenkkopf 5 den aufgefächerten Solarpaneelen 2 weitere Bewegungsfreiheiten um eine vertikale Drehachse 10 und/oder um eine horizontale Drehachse 11 verleihen, wodurch die Drehachse 3 bzw. die Solarpaneele 2 optimal auf die Sonne ausgerichtet werden können. Elektrische Drehantriebe 12, 13, 14 zum Verschwenken des Schwenkkopfes 5 um die Drehachsen 10 bzw. 11 sowie zum Auffächern der Solarpaneele 2 um die Drehachse 3 können beispielsweise wie in der AT 509886 B1 beschrieben als Schneckentriebe mit Zahnkränzen und darin eingreifende Schnecken ausgeführt werden, ebenso wie ein Schwenkantrieb für das Verschwenken des Trägers 4 gegenüber der Grundkonstruktion 7 um die Achse 8. Standkonstruktion bzw. Gehäuse 7, Träger 4 und Schwenkkopf 5 bilden somit eine Tragstruktur für das eigentliche Auffächerlager 15 der Solarpaneele 2, welches in den Fig. 3 - 8 in verschiedenen Ausführungsformen im Detail gezeigt ist.

Fig. 3 zeigt eine erste Ausführungsform des Auffächerlagers 15 zur Schwenklagerung der radial inneren, achsseitigen Endabschnitte 2' der Solarpaneele 2 an einem Endteil 5' des Schwenkkopfes 5 im Schnitt. Der Kopf-Endteil 5' lagert über ein Wälzlager 16 und einen Verankerungsring 17 eine rohrförmige Achse 18, auf welcher die Endabschnitte 2' der Solarpaneele 2 - gegebenenfalls unter Zwischenschaltung einer Gleithülse 19, z.B. aus Kunststoff wie beispielsweise PTFE - aufgefädelt und schwenkgelagert sind. Die Endabschnitte 2' dienen gleichzeitig zum Schleppantrieb der Solarpaneele 2 beim Auf- und Einfächern. Zu diesem Zweck wird die Achse 18 von dem Drehantrieb 14 um die Drehachse 3 drehangetrieben. Der Drehantrieb 14 kann beispielsweise dadurch realisiert werden, dass der Lagerring 17 mit einem Außenzahnkranz versehen und von einem Schneckenmotor 20 (nur schematisch dargestellt) angetrieben wird. Die Achse 18 könnte jedoch auch auf andere in der Technik bekannte Weise drehangetrieben werden.

Der Endabschnitt 2' des ersten, der Tragstruktur 4, 5, 7 zugewandten Solarpaneels 2 (in Fig. 3 links) ist drehfest mit der Tragstruktur 4, 5, 7 verbunden, beispielsweise durch Bolzen 21, welche den Endabschnitt 2' mit einer Stirnplatte 22 des Kopf-Endteils 5' verbolzen. Der Endabschnitt 2' des letzten, der Tragstruktur 4, 5, 7 abgewandten Solarpaneels 2 (in Fig. 3 rechts) ist wiederum über Bolzen 23 mit einer Deckelplatte 24 drehfest verbunden, welche ihrerseits mit dem äußeren Ende 25 der Achse 18 über Bolzen 26 und Muttern 27 drehfest verbunden ist. Bei Drehung der Achse 18 wird somit das äußerste, rechte Solarpaneel 2 von der Deckelplatte 24 drehangetrieben, und jeweils ein Solarpaneel 2 schleppt über eine Mitnehmerkonstruktion in den Endabschnitten 2' das jeweils nächste Solarpaneel 2 mit, bis das drehfeste innerste (linke) Solarpaneel 2 die Auf- bzw. Einfächerbewegung begrenzt und beendet.

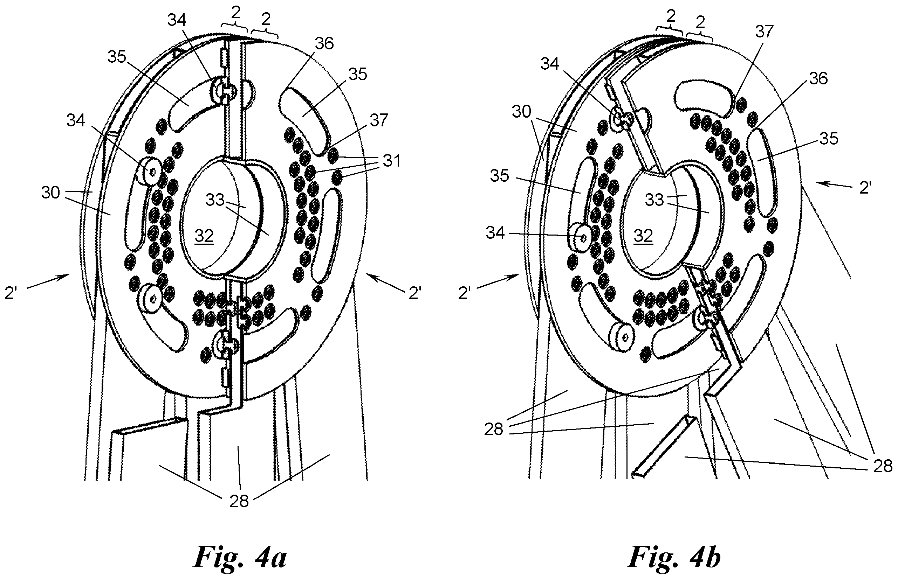

Die Mitnehmerkonstruktion von Fig. 3 wird nun anhand der teilweise aufgebrochenen Perspektivansichten der Fig. 4a und 4b näher erläutert. Wie in Fig. 4a erkennbar, weist bei dieser Ausführungsform jedes Solarpaneel 2 drei radiale Stützstreben 28 auf, welche das Rückgrat für ein darauf befestigtes photovoltaisches Paneel 29 bilden, das die einzelnen Solarzellen 6 enthält. Die Stützstreben 28 ("Blattadern") des Solarpaneels 2 ("Blütenblatts") sind beispielsweise Strangpressprofile aus Aluminium mit rechteckigem Querschnitt.

Die der Achse 18 zugewandten Enden der Stützstreben 28 sind sandwichartig zwischen zwei auf der Achse 18 gelagerten, etwa scheibenförmigen Montageplatten 30 montiert, beispielsweise über eine Vielzahl von Schraub- oder Nietverbindungen 31 oder durch Verschweißen. Der Kraftfluss von den Stützstreben 28 wird damit symmetrisch rund um die Achse 18 verteilt, wie in Fig. 4a erkennbar. Die zwischen den Montageplatten 30 aufgenommenen Enden der Stützstreben 28 bilden zusammen mit den Montageplatten 30 den Endabschnitt 2' des Solarpaneels 2. Der Endabschnitt 2' besitzt somit eine zentrale Öffnung 32 für den Durchtritt der Achse 18, welche Öffnung 32 mit einem zusätzlichen Verstärkungsring 33 ausgekleidet sein kann, der auf der Achse 18 oder der zwischengelegten Gleithülse 19 gleitet. Zwischen der Montageplatten 30 zweier benachbarter Endabschnitte 2' können Gleitringe 30', z.B. aus reibungsminimierendem Material wie beispielsweise PTFE-Kunststoff, zwischengelegt sein.

Als Mitnehmerkonstruktion zwischen den Endabschnitten 2' zweier benachbarter Solarpaneele 2 ist jeweils die eine Montageplatte 30 (in den Fig. 4a und 4b die jeweils hintere und in Fig. 3 die jeweils rechte) mit Mitnehmern in Form von Bolzen 34 ausgestattet, die beispielsweise in die Montageplatte 30 eingenietet sind. Im gezeigten Beispiel sind sechs über den Umfang verteilte Bolzen 34 vorgesehen. Die Bolzen 34 greifen in Langlöcher 35 ein, die in der jeweils anderen (in den Fig. 4a und 4b der jeweils vorderen und in Fig. 3 der jeweils linken) Montageplatte 30 des benachbarten Endabschnitts 2' vorgesehen sind. Jedes Langloch 35 erstreckt sich in tangentialer bzw. Umfangsrichtung der Montageplatte 30 über den Auffächerwinkel von z.B. etwa 30° und seine tangentialen Enden 36, 37 bilden Endanschläge für den Bolzen 34. Beim Auffächern der Solarpaneele 2 von der in Fig. 4a gezeigten Stellung in die in Fig. 4b gezeigte Stellung bewegt sich jeder Bolzen 34 in einem Langloch 35 von dessen einem Ende 36 zu dessen anderem Ende 37 und umgekehrt.

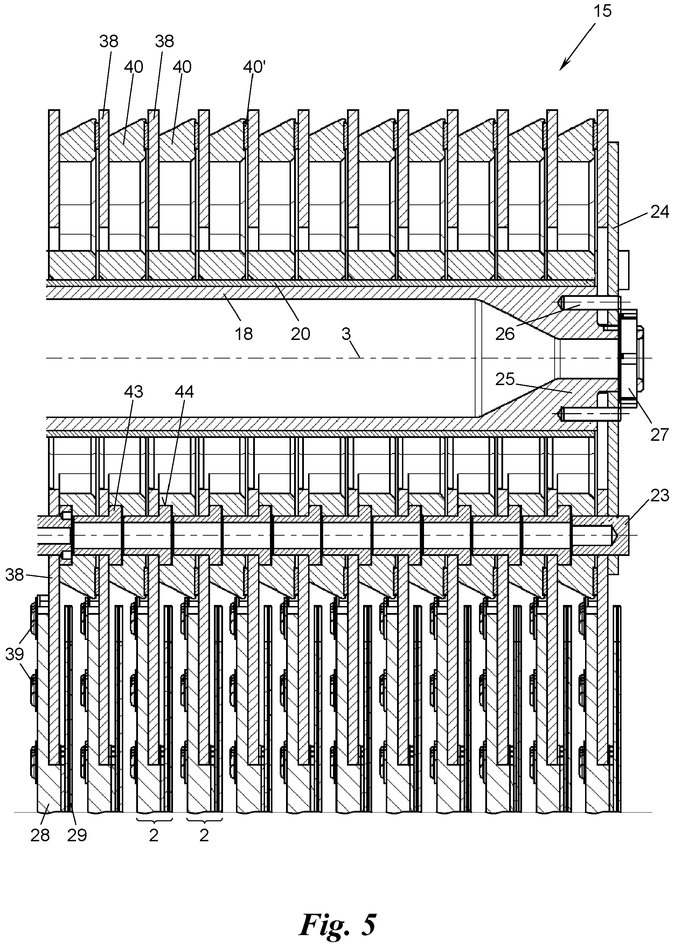

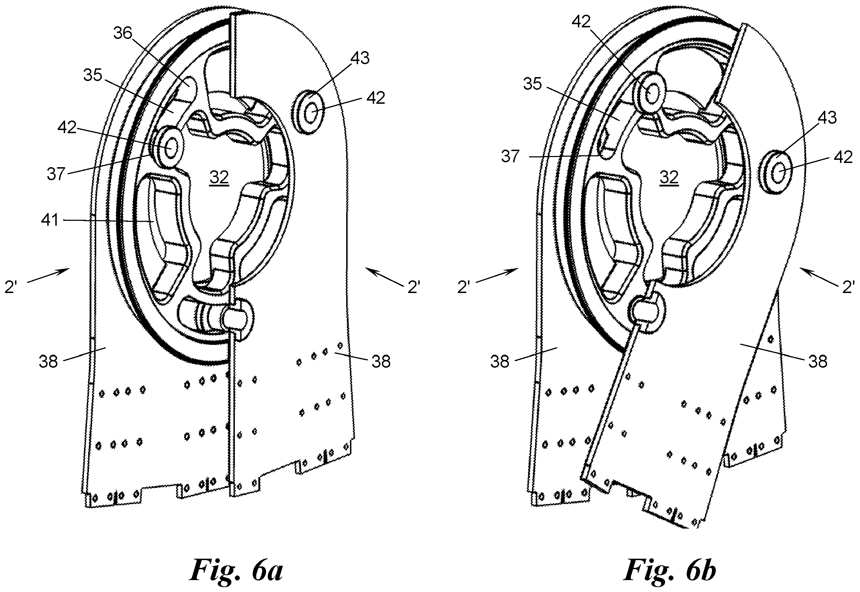

Die Fig. 5, 6a und 6b zeigen eine zweite Ausführungsform der Solarpaneele 2, ihrer Endabschnitte 2' und des Auffächerlagers 15. In dieser Ausführungsform hat jeder Endabschnitt 2' nur eine einzige Montageplatte 38, an welcher die Stützstreben 28 beispielsweise über Schraubverbindungen 39 einseitig befestigt sind. Die Montageplatten 38 sind beispielsweise aus 8 mm starkem Aluminium gefertigt. Da die Stützstreben 28 und die von diesen getragenen Photovoltaikpaneele 29 eine größere Dicke haben und daher die Montageplatten 38 auf der Achse 18 entsprechend beabstandet zu lagern sind, ist jede Montageplatte 38 hier mit einer einseitig anliegenden Distanzscheibe 40 versehen.

Die Distanzscheibe 40 ist beispielsweise ein Kunststoff-Spritzgussteil und beherbergt - neben weiteren Durchbrechungen 41 zur Material- und Gewichtseinsparung - tangentiale Langlöcher 35 analog der ersten Ausführungsform der Fig. 3 und 4. In die Langlöcher 35 greifen wieder Bolzen 42 ein, die an der Montageplatte 38 des jeweils benachbarten Endabschnitts 2' verankert sind. Die Bolzen 42 können sich in den Langlöchern 35 zwischen deren als Anschläge dienenden Enden 36, 37 bewegen, um die Solarpaneele 2 von der eingefächerten Stellung (Fig. 6a) in die aufgefächerte Stellung (Fig. 6b) zu bewegen und umgekehrt.

Die Bolzen 42 nehmen dabei gleichzeitig eine Doppelfunktion ein: Wie gezeigt durchsetzt jeder Bolzen 42 die Montageplatte 38 und ist an seinem einen austretenden Ende zu einem Kopf 43 verbreitert, welcher in einer Ausnehmung 44 der Distanzscheibe 40 seines Endabschnitts 2' rastet, um die Distanzscheibe 40 drehfest gegenüber der Montageplatte 38 zu fixieren. Mit seinem anderen austretenden Ende greift der Bolzen 42 in das tangentiale Langloch 35 der Distanzscheibe 40 des benachbarten Endabschnitts 2' ein.

Die Distanzscheiben 40 können an ihren an jeweils einer benachbarten Montageplatte 38 gleitenden Oberflächen mit einer Gleitbeschichtung oder gesonderten Gleitringen 40' versehen oder überhaupt aus reibungsminimierendem Material, wie beispielsweise PTFE-Kunststoff, gefertigt sein.

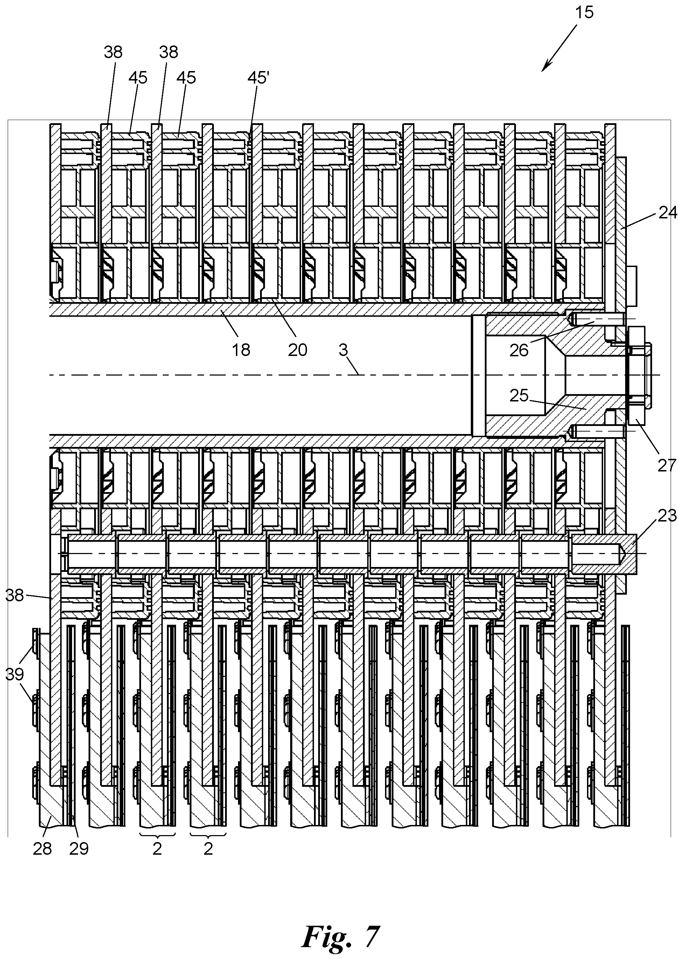

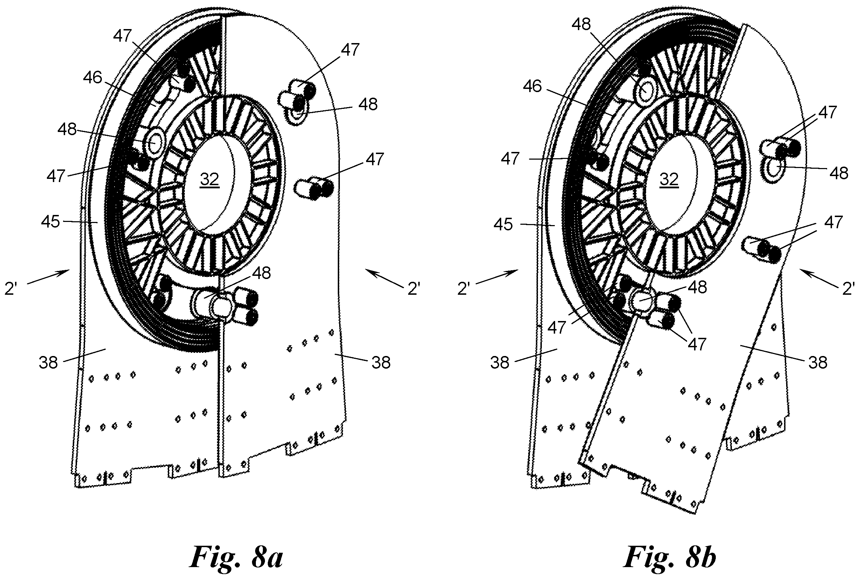

Die Fig. 7 und 8 zeigen eine dritte Ausführungsform der Solarpaneele 2, ihrer Endabschnitte 2' und des Auffächerlagers 15. Jeder Endabschnitt 2' umfasst hier wieder eine einzelne Montageplatte 38 wie bei der Ausführungsform der Fig. 5 und 6, an welcher die Stützstreben 28 für die Photovoltaikmodule 29 mittels der Schraubverbindungen oder Nieten 39 montiert sind. Zwischen den Montageplatten 38 zweier benachbarter Endabschnitte 2' ist jeweils wieder eine Distanzscheibe 45 angeordnet. Die Distanzscheiben 45 sind diesmal jedoch nicht drehfest mit jeweils einer Flanschplatte 38 verbunden, sondern in Form loser, auf der Achse 18 sitzender Gleitscheiben ausgeführt, die auf zumindest einer Seite mit einem Gleitbelag oder gesonderten Gleitring 45' versehen oder überhaupt aus reibungsminimierendem Material, wie beispielsweise PTFE-Kunststoff, gefertigt sind.

Die Distanzscheiben 45 haben tangentiale Langlöcher 46 oder noch größere Durchbrechungen, welche nun nicht selbst Anschläge für Mitnehmer (wie bei den vorigen Ausführungsformen) bilden, sondern den ungehinderten Durchtritt von gesonderten Anschlägen 46 einer Montageplatte 38 gestatten, welche mit in der benachbarten Montageplatte 38 verankerten Bolzen 47 zusammenwirken. Ein Bolzen 47 der Montageplatte 38 eines Endabschnitts 2' kann sich daher beim Auffächern der Solarpaneele 2 jeweils zwischen zwei Anschlägen 46 der Montageplatte 38 eines benachbarten Endabschnitts 2' bewegen, wie in den Fig. 8a und 8b gezeigt.

Die Distanzscheiben 45 können beispielsweise als filigrane und leichtgewichtige Kunststoff-Spritzgussteile ausgeführt sein, die hier lediglich in Axialrichtung druckfest strukturiert sein müssen, z.B. mit einer Vielzahl von Stegen.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Solarmodul (1), mit einer Vielzahl von lamellenförmigen Solarpaneelen (2), die auf einer gemeinsamen Achse (18) zwischen einer ersten Stellung, in der sie im wesentlichen deckungsgleich übereinanderliegen, und einer zweiten Stellung, in der sie aufgefächert im wesentlichen nebeneinanderliegen, verschwenkbar gelagert sind, **dadurch gekennzeichnet, dass** von je zwei einander benachbarten Solarpaneelen (2) ausschließlich der achsseitige Endabschnitt (2') des einen Solarpaneels (2) zumindest einen Mitnehmer (34, 42, 48) und ausschließlich der achsseitige Endabschnitt (2') des anderen Solarpaneels (2) zwei mit dem Mitnehmer (34, 42, 48) zusammenwirkende, in Tangentialrichtung voneinander beabstandete Anschläge (36, 37, 47) aufweist, wobei die Solarpaneele (2) in der aufgefächerten zweiten Stellung in ihren an die genannten Endabschnitte (2') anschließenden radial auskragenden Abschnitten voneinander beabstandet sind,
wobei jeweils zwei in Tangentialrichtung voneinander beabstandete Anschläge (36, 37) durch ein tangentiales Langloch (35) im Endabschnitt (2') gebildet sind, in welches der Mitnehmer (34, 42) des benachbarten Endabschnitts (2') eingreift, und
wobei zumindest ein Endabschnitt (2') aus den Enden von Stützstreben (28) eines Solarpaneels (2) gebildet ist, welche sandwichartig zwischen zwei auf der Achse (18) gelagerten Montageplatten (30) befestigt sind, von denen die eine das zumindest eine tangentiale Langloch (35) und die andere einen Mitnehmer (34) aufweist.

2. Solarmodul nach Anspruch 1, **dadurch gekennzeichnet, dass** die Endabschnitte (2') etwa scheibenförmig sind und je zwei einander benachbarte Endabschnitte (2') auf ihren einander zugewandten Scheibenseiten zumindest zwei, bevorzugt zumindest drei, in Tangentialrichtung verteilte Mitnehmer (34, 42, 48) und damit zusammenwirkende Anschläge (36, 37, 47) aufweisen.

3. Solarmodul nach Anspruch 1 oder 2, **dadurch gekennzeichnet, dass** der Mitnehmer (34) ein mit der Montageplatte (30) vernieteter Bolzen (34) ist.

4. Solarmodul (1), mit einer Vielzahl von lamellenförmigen Solarpaneelen (2), die auf einer gemeinsamen Achse (18) zwischen einer ersten Stellung, in der sie im wesentlichen deckungsgleich übereinanderliegen, und einer zweiten Stellung, in der sie aufgefächert im wesentlichen nebeneinanderliegen, verschwenkbar gelagert sind, **dadurch gekennzeichnet, dass** von je zwei einander benachbarten Solarpaneelen (2) ausschließlich der achsseitige Endabschnitt (2') des einen Solarpaneels (2) zumindest einen Mitnehmer (34, 42, 48) und ausschließlich der achsseitige Endabschnitt (2') des anderen Solarpaneels (2) zwei mit dem Mitnehmer (34, 42, 48) zusammenwirkende, in Tangentialrichtung voneinander beabstandete Anschläge (36, 37, 47) aufweist, wobei die Solarpaneele (2) in der aufgefächerten zweiten Stellung in ihren an die genannten Endabschnitte (2') anschließenden radial auskragenden Abschnitten voneinander beabstandet sind,
wobei jeweils zwei in Tangentialrichtung voneinander beabstandete Anschläge (36, 37) durch ein tangentiales Langloch (35) im Endabschnitt (2') gebildet sind, in welches der Mitnehmer (34, 42) des benachbarten Endabschnitts (2') eingreift, und
wobei zumindest ein Endabschnitt (2') aus einer auf der Achse (18) gelagerten Montageplatte (38) für Stützstreben (28) eines Solarpaneels (2) und einer daran drehfest anliegenden Distanzscheibe (40) gebildet ist, wobei die Distanzscheibe (40) das zumindest eine tangentiale Langloch (35) und die Montageplatte (38) zumindest einen auskragenden Bolzen (42) als Mitnehmer (42) aufweist.

5. Solarmodul nach Anspruch 4, **dadurch gekennzeichnet, dass** die Endabschnitte (2') etwa scheibenförmig sind und je zwei einander benachbarte Endabschnitte (2') auf ihren einander zugewandten Scheibenseiten zumindest zwei, bevorzugt zumindest drei, in Tangentialrichtung verteilte Mitnehmer (34, 42, 48) und damit zusammenwirkende Anschläge (36, 37, 47) aufweisen.

6. Solarmodul nach Anspruch 4 oder 5, **dadurch gekennzeichnet, dass** der Bolzen (42) die Montageplatte (38) durchsetzt und in einer Ausnehmung (44) der Distanzscheibe (40) rastet.

7. Solarmodul (1), mit einer Vielzahl von lamellenförmigen Solarpaneelen (2), die auf einer gemeinsamen Achse (18) zwischen einer ersten Stellung, in der sie im wesentlichen deckungsgleich übereinanderliegen, und einer zweiten Stellung, in der sie aufgefächert im wesentlichen nebeneinanderliegen, verschwenkbar gelagert sind, **dadurch gekennzeichnet, dass** von je zwei einander benachbarten Solarpaneelen (2) ausschließlich der achsseitige Endabschnitt (2') des einen Solarpaneels (2) zumindest einen Mitnehmer (34, 42, 48) und ausschließlich der achsseitige Endabschnitt (2') des anderen Solarpaneels (2) zwei mit dem Mitnehmer (34, 42, 48) zusammenwirkende, in Tangentialrichtung voneinander beabstandete Anschläge (36, 37, 47) aufweist, wobei die Solarpaneele (2) in der aufgefächerten zweiten Stellung in ihren an die genannten Endabschnitte (2') anschließenden radial auskragenden Abschnitten voneinander beabstandet sind,
wobei zwischen zumindest zwei Endabschnitten (2') eine Distanzscheibe (45) auf die Achse (18) aufgefädelt ist, welche tangentiale Langlöcher (46) für den Durchtritt der miteinander zusammenwirkenden Mitnehmer (48) und Anschläge (47) der Endabschnitte (2') hat.

8. Solarmodul nach Anspruch 7, **dadurch gekennzeichnet, dass** die Endabschnitte (2') etwa scheibenförmig sind und je zwei einander benachbarte Endabschnitte (2') auf ihren einander zugewandten Scheibenseiten zumindest zwei, bevorzugt zumindest drei, in Tangentialrichtung verteilte Mitnehmer (34, 42, 48) und damit zusammenwirkende Anschläge (36, 37, 47) aufweisen.

9. Solarmodule nach Anspruch 7 oder 8, **dadurch gekennzeichnet, dass** die Distanzscheibe (45) als vielfach durchbrochene Gleitscheibe ausgebildet ist.

10. Solarmodul nach einem der Ansprüche 1 bis 9, **dadurch gekennzeichnet, dass** zwölf Solarpaneele (2) vorgesehen sind und sich jedes Langloch (35, 46) tangential über einen Winkel von etwa 30° erstreckt.

11. Solarmodul nach einem der Ansprüche 1 bis 10, **dadurch gekennzeichnet, dass** die Achse (18) an einer Tragstruktur (4, 5, 7) des Solarmoduls (1) drehbar gelagert ist, wobei der Endabschnitt (2') des ersten, der Tragstruktur (4, 5, 7) zugewandten Solarpaneels (2) an der Tragstruktur (5') festgelegt ist und der Endabschnitt (2') des letzten, der Tragstruktur (4, 5, 7) abgewandten Solarpaneels (2) mit der Achse (18) drehfest verbunden ist.

12. Solarmodul nach Anspruch 11, **dadurch gekennzeichnet, dass** das der Tragstruktur (4, 5, 7) abgewandte Ende (25) der Achse (18) mit einer Deckelplatte (24) versehen ist, welche mit dem letzten Endabschnitt (2') drehfest verbunden ist.

13. Solarmodul nach einem der Ansprüche 1 bis 12, **dadurch gekennzeichnet, dass** die Achse (18) über ein Schneckengetriebe (17, 20) von einem Elektromotor (14) angetrieben ist.

14. Solarmodul nach einem der Ansprüche 1 bis 13, **dadurch gekennzeichnet, dass** die Endabschnitte (2') über eine gemeinsame Gleithülse (19) auf der Achse (18) gelagert sind.

15. Solarmodul nach einem der Ansprüche 1 bis 14, **dadurch gekennzeichnet, dass** zwischen den Endabschnitten (2') Gleitscheiben (30', 40', 45') angeordnet sind.

## Claims

1. Solar module (1), comprising a plurality of lamellar solar panels (2), which are mounted on a common axis (18) so as to be able to pivot between a first position, in which they are positioned one over the other in a substantially congruent manner, and a second position, in which they are fanned-out so as to substantially lie next to each other, **characterized in that** of each two neighbouring solar panels (2) only the end section (2'), which is located on the side of the axis, of one solar panel (2) comprises at least one catch (34, 42, 48) and only the end section (2'), which is located on the side of the axis, of the other panel (2) comprises two stops (36, 37, 47), which interact with the catch (34, 42, 48) and have a mutual distance in a tangential direction, wherein the solar panels (2) are mutually spaced from each other in the fanned-out second position at their radially protruding sections which adjoin said end sections (2'),
wherein each two stops (36, 37) mutually distanced in a tangential direction are embodied by a tangential oblong hole (35) in the end section (2'), into which the catch (34, 42) of the neighbouring end section (2') engages, and
wherein at least one end section (2') is embodied by the ends of support struts (28) of a solar panel (2), which are mounted in a sandwich-like manner between two mounting plates (30) mounted on the axis (18), of which one comprises the at least one tangential oblong hole (35) and the other a catch (34).

2. Solar module according to claim 1, **characterized in that** the end sections (2') have an approximately disk-like shape and each two neighbouring end sections (2') comprise, on their mutually facing disk-sides, at least two, preferably at least three, catches (34, 42, 48) distributed in a tangential direction and therewith interacting stops (36, 37, 47).

3. Solar module according to claim 1 or 2, **characterized in that** the catch (34) is a bolt riveted to the mounting plate (30).

4. Solar module (1), comprising a plurality of lamellar solar panels (2), which are mounted on a common axis (18) so as to be able to pivot between a first position, in which they are positioned one over the other in a substantially congruent manner, and a second position, in which they are fanned-out so as to substantially lie next to each other, **characterized in that** of each two neighbouring solar panels (2) only the end section (2'), which is located on the side of the axis, of one solar panel (2) comprises at least one catch (34, 42, 48) and only the end section (2'), which is located on the side of the axis, of the other panel (2) comprises two stops (36, 37, 47), which interact with the catch (34, 42, 48) and have a mutual distance in a tangential direction, wherein the solar panels (2) are mutually spaced from each other in the fanned-out second position at their radially protruding sections which adjoin said end sections (2'),
wherein each two stops (36, 37) mutually distanced in a tangential direction are embodied by a tangential oblong hole (35) in the end section (2'), into which the catch (34, 42) of the neighbouring end section (2') engages, and
wherein at least one end section (2') is embodied by a mounting plate (38) mounted on the axis (18) for supporting struts (28) of a solar panel (2) and by a spacer disk (40) lying against said mounting plate in a rotation-fixed manner, wherein the spacer disk (40) comprises at least one tangential oblong hole (35) and the mounting plate (38) comprises at least one protruding bolt (42) as a catch (42).

5. Solar module according to claim 4, **characterized in that** the end sections (2') have an approximately disk-like shape and each two neighbouring end sections (2') comprise, on their mutually facing disk-sides, at least two, preferably at least three, catches (34, 42, 48) distributed in a tangential direction and therewith interacting stops (36, 37, 47).

6. Solar module according to claim 4 or 5, **characterized in that** the bolt (42) penetrates the mounting plate (38) and rests in a recess (44) of the spacer disk (40).

7. Solar module (1), comprising a plurality of lamellar solar panels (2), which are mounted on a common axis (18) so as to be able to pivot between a first position, in which they are positioned one over the other in a substantially congruent manner, and a second position, in which they are fanned-out so as to substantially lie next to each other, **characterized in that** of each two neighbouring solar panels (2) only the end section (2'), which is located on the side of the axis, of one solar panel (2) comprises at least one catch (34, 42, 48) and only the end section (2'), which is located on the side of the axis, of the other panel (2) comprises two stops (36, 37, 47), which interact with the catch (34, 42, 48) and have a mutual distance in a tangential direction, wherein the solar panels (2) are mutually spaced from each other in the fanned-out second position at their radially protruding sections which adjoin said end sections (2'),
wherein there is, between at least two end sections (2'), a spacer disk (45) threaded onto the axis (18), which has tangential oblong holes (46) for the passing-through of the interacting catches (48) and stops (47) of the end sections (2').

8. Solar module according to claim 7, **characterized in that** the end sections (2') have an approximately disk-like shape and each two neighbouring end sections (2') comprise, on their mutually facing disk-sides, at least two, preferably at least three, catches (34, 42, 48) distributed in a tangential direction and therewith interacting stops (36, 37, 47).

9. Solar module according to claim 7 or 8, **characterized in that** the spacer disk (45) is embodied as a multiply perforated sliding disk.

10. Solar module according to any one of the claims 3 to 9, **characterized in that** twelve solar panels (2) are provided and each oblong hole (35, 46) extends tangentially over an angle of approximately 30°.

11. Solar module according to any one of the claims 1 to 10, **characterized in that** the axis (18) is rotatably mounted on a support structure (4, 5, 7) of the solar module (1), wherein the end section (2') of the first solar panel (2), which is located near the support structure (5'), is fixed on the support structure and the end section (2') of the last solar panel (2), which is positioned away from the support structure (4, 5, 7), is connected to the axis (18) in a rotation-fixed manner.

12. Solar module according to claim 11, **characterized in that** the end (25) of the axis (18) which is positioned away from the support structure (4, 5, 7) is provided with a top plate (24), which is connected to the last end section (2') in a rotation-fixed manner.

13. Solar module according to any one of the claims 1 to 12, **characterized in that** the axis (18) is driven via a worm gear (17, 20) by an electric motor (14).

14. Solar module according to any one of the claims 1 to 13, **characterized in that** the end sections (2') are mounted via a common sliding sleeve (19) on the axis (18).

15. Solar module according to any one of the claims 1 to 14, **characterized in that** sliding disks (30', 40', 45') are arranged between the end sections (2').

## Revendications

1. Module solaire (1), avec une multiplicité de panneaux solaires (2) en forme de lamelles qui sont logés sur un axe (18) commun en pouvant pivoter entre une première position, dans laquelle elles se superposent essentiellement de manière complète, et une deuxième position, dans laquelle elles se déploient en éventail essentiellement les unes à côté des autres, **caractérisé en ce que**, pour deux panneaux solaires (2) respectivement voisins l'un de l'autre, exclusivement le segment d'extrémité (2') du côté de l'axe d'un panneau solaire (2) donné présente au moins un système d'entraînement (34, 42, 48), et exclusivement le segment d'extrémité (2') du côté de l'axe de l'autre panneau solaire (2) donné présente deux butées (36, 37, 47) espacées l'une de l'autre dans la direction tangentielle, agissant conjointement avec le système d'entraînement (34, 42, 48), où, dans la deuxième position déployée en éventail, les panneaux solaires (2) sont espacés l'un par rapport à l'autre au niveau de leurs segments s'évasant radialement adjacents aux dits segments d'extrémité (2'),
où respectivement deux butées (36, 37) espacées l'une de l'autre dans la direction tangentielle sont formées par un orifice oblong (35) tangentiel dans le segment d'extrémité (2'), dans lequel le système d'entrainement (34, 42) du segment d'extrémité (2') voisin se met en prise, et
où au moins un segment d'extrémité (2') est formé à partir des extrémités de barres d'appui (28) d'un panneau solaire (2), lesquelles sont fixées en sandwich entre deux plaques de montage (30) disposées sur l'axe (18), parmi lesquelles l'une présente l'au moins un orifice oblong (35) tangentiel et l'autre présente un système d'entraînement (34).

2. Module solaire selon la revendication 1, **caractérisé en ce que** les segments d'extrémité (2') ont à peu près la forme de disques et deux segments d'extrémité (2') voisins l'un de l'autre présentent respectivement, sur leurs côtés de disques orientés l'un vers l'autre, au moins deux, de préférence au moins trois, systèmes d'entraînement (34, 42, 48) distribués dans la direction tangentielle et des butées (36, 37, 47) agissant conjointement avec eux.

3. Module solaire selon la revendication 1 ou 2, **caractérisé en ce que** le système d'entraînement (34) est un boulon (34) riveté avec la plaque de montage (30).

4. Module solaire (1), doté d'une multiplicité de panneaux solaires (2) en forme de lamelles qui sont logés sur un axe (18) commun en pouvant pivoter entre une première position, dans laquelle elles se superposent essentiellement de manière complète, et une deuxième position, dans laquelle elles se déploient en éventail essentiellement les unes à côté des autres, **caractérisé en ce que** pour deux panneaux solaires (2) voisins l'un de l'autre, exclusivement le segment d'extrémité (2') du côté de l'axe d'un panneau solaire (2) donné présente au moins un système d'entraînement (34, 42, 48) et exclusivement le segment d'extrémité (2') du côté de l'axe de l'autre panneau solaire (2) donné présente deux butées (36, 37, 47) espacées l'une de l'autre dans la direction tangentielle, agissant conjointement avec le système d'entraînement (34, 42, 48), où, dans la deuxième position déployée en éventail, les panneaux solaires (2) sont espacés l'un par rapport à l'autre au niveau de leurs segments s'évasant radialement adjacents aux dits segments d'extrémité (2'),
où respectivement deux butées (36, 37) espacées l'une de l'autre dans la direction tangentielle sont formées par un orifice oblong (35) tangentiel dans le segment d'extrémité (2'), dans lequel le système d'entrainement (34, 42) du segment d'extrémité (2') voisin se met en prise, et
où au moins un segment d'extrémité (2') est formé à base d'une plaque de montage (38) pour les barres d'appui (28) d'un panneau solaire (2) logée sur l'axe (18) et d'un disque d'écartement (40) y prenant appui en ne pouvant pas tourner, où le disque d'écartement (40) présente l'au moins un orifice oblong (35) tangentiel et la plaque de montage (38) présente au moins un boulon (42) s'évasant en tant que système d'entraînement (42).

5. Module solaire selon la revendication 4, **caractérisé en ce que** les segments d'extrémité (2') sont à peu près en forme de disques et deux segments d'extrémité (2') voisins l'un de l'autre présentent sur leurs côtés de disques orientés l'un vers l'autre au moins deux, de préférence au moins trois, systèmes d'entraînement (34, 42, 48) distribués dans la direction tangentielle et des butées (36, 37, 47) agissant conjointement avec eux.

6. Module solaire selon la revendication 4 ou 5, **caractérisé en ce que** le boulon (42) traverse la plaque de montage (38) et se met en butée dans une cavité (44) du disque d'écartement (40).

7. Module solaire (1) doté d'une multiplicité de panneaux solaires (2) en forme de lamelles qui sont logés sur un axe (18) commun en pouvant pivoter entre une première position, dans laquelle elles se superposent essentiellement de manière complète, et une deuxième position, dans laquelle elles se déploient en éventail essentiellement les unes à côté des autres, **caractérisé en ce que**, pour deux panneaux solaires (2) voisins l'un de l'autre, exclusivement le segment d'extrémité (2') du côté de l'axe d'un panneau solaire (2) donné présente au moins un système d'entraînement (34, 42, 48) et exclusivement le segment d'extrémité (2') du côté de l'axe de l'autre panneau solaire (2) donné présente deux butées (36, 37, 47) espacées l'une de l'autre dans la direction tangentielle, agissant conjointement avec le système d'entraînement (34, 42, 48), où, dans la deuxième position déployée en éventail, les panneaux solaires (2) sont espacés l'un par rapport à l'autre au niveau de leurs segments s'évasant radialement adjacents aux dits segments d'extrémité (2'),
où, entre au moins deux segments d'extrémité (2'), un disque d'écartement (45) est enfilé sur l'axe (18), lequel a des orifices oblongs (46) tangentiels pour le passage des systèmes d'entraînement (48) agissant conjointement et de butées (47) des segments d'extrémité (2').

8. Module solaire selon la revendication 7, **caractérisé en ce que** les segments d'extrémité (2') sont à peu près en forme de disques et tous les deux segments d'extrémité (2') voisins l'un de l'autre présentent respectivement, sur leurs côtés de disques orientés l'un vers l'autre, au moins deux, de préférence au moins trois, systèmes d'entraînement (34, 42, 48) distribués dans la direction tangentielle et des butées (36, 37, 47) agissant conjointement avec eux.

9. Modules solaires selon la revendication 7 ou la revendication 8, **caractérisés en ce que** le disque d'écartement (45) est conçu sous la forme d'un disque de glissement plusieurs fois interrompu.

10. Module solaire selon l'une des revendications 1 à 9, **caractérisé en ce que** douze panneaux solaires (2) sont prévus et que chaque orifice oblong (35, 36) s'étend de manière tangentielle sur un angle d'environ 30°.

11. Module solaire selon l'une des revendications 1 à 10, **caractérisé en ce que** l'axe (18) est logé, en pouvant être mis en rotation, sur une structure support (4, 5, 7) du module solaire (1), où le segment d'extrémité (2') du premier panneau solaire (2) orienté vers la structure de support (4, 5, 7) est fixe sur la structure support (4, 5, 7) et le segment d'extrémité (2') du dernier panneau solaire (2) opposé à la structure de support (4, 5, 7) est fixé sans pouvoir être mis en rotation avec l'axe (18).

12. Module solaire selon la revendication 11, **caractérisé en ce que** l'extrémité (25) opposée à l'axe (18) de la structure support (4, 5, 7) est munie d'une plaque de recouvrement (24), laquelle est reliée avec le dernier segment d'extrémité (2') en ne pouvant pas mise en rotation.

13. Module solaire selon l'une des revendications 1 à 12, **caractérisé en ce que** l'axe (18) est entraîné par un moteur électrique (14) par le biais d'une vis sans fin (17, 20).

14. Module solaire selon l'une des revendications 1 à 13, **caractérisé en ce que** les segments d'extrémités (2') sont logés sur l'axe (18) par le biais d'un manchon coulissant (19).

15. Module solaire selon l'une des revendications 1 à 14, **caractérisé en ce que** des disques de glissement (30', 40', 45') sont disposés entre les segments d'extrémité (2').
